# EUROPEAN PATENT SPECIFICATION

(11) **EP 4 425 904 B1**
(45) Date of publication and mention of the grant of the patent: **24.09.2025**
(21) Application number: 23187592.3
(22) Date of filing: 25.07.2023
(51) Int. Cl.: H04N 1/00, G06F 3/12

(54) **INFORMATION PROCESSING SYSTEM, PROGRAM, AND INFORMATION PROCESSING METHOD**
INFORMATIONSVERARBEITUNGSSYSTEM, PROGRAMM UND INFORMATIONSVERARBEITUNGSVERFAHREN
SYSTÈME, PROGRAMME ET PROCÉDÉ DE TRAITEMENT D'INFORMATIONS

(30) Priority: 02.03.2023 JP 2023031550
(43) Date of publication of application: 04.09.2024
(73) Proprietor: FUJIFILM Business Innovation Corp., Minato-ku Tokyo (JP)
(72) Inventor: NOGUCHI, Daisuke, Yokohama-shi, Kanagawa (JP); NAKAYAMA, Hiroyoshi, Yokohama-shi, Kanagawa (JP); YAMAGUCHI, Megumi, Yokohama-shi, Kanagawa (JP); KAWABE, Masatake, Yokohama-shi, Kanagawa (JP)
(74) Representative: Kurig, Thomas

(56) References cited:
- JP-A- 2017 163 388
- US-A1- 2022 116 504

## Description

### BACKGROUND OF THE INVENTION

### (i) Field of the Invention

The present invention relates to an information processing system, a program, and an information processing method.

### (ii) Description of Related Art

In the field of commercial printing or production printing, an output printed matter is scanned, and it is checked, for example, whether or not there is a stain and whether or not correct information is printed.

In printing, a special color material may be used in addition to color materials (for example, ink or toner) of process colors such as cyan, magenta, yellow, and black. Examples of the special color material include a color material of a spot color specially formulated to express a color having a difficulty in expression with the process colors, a color material of a metallic color such as gold or silver, and a color material of a white color used as a base, and a transparent color material used for expressing gloss, a three-dimensional feeling, and the like.

The following apparatus or method for inspecting a printed matter using a special color material are known.

JP2022-075726A (Fig. 7 in the same document, for example) discloses that, in an image inspection of a coated printed matter, the inspection accuracy of a portion overlapping a printed image in a region in which coating is applied is set to be higher than the inspection accuracy of a portion that does not overlap the printed image.

JP2021-088139A (paragraph [0064], for example) discloses that, in an inspection of a printed matter, the inspection accuracy of a region in which a base image using white toner or the like is formed is set to be higher than the inspection accuracy of a region in which the base image is not formed.

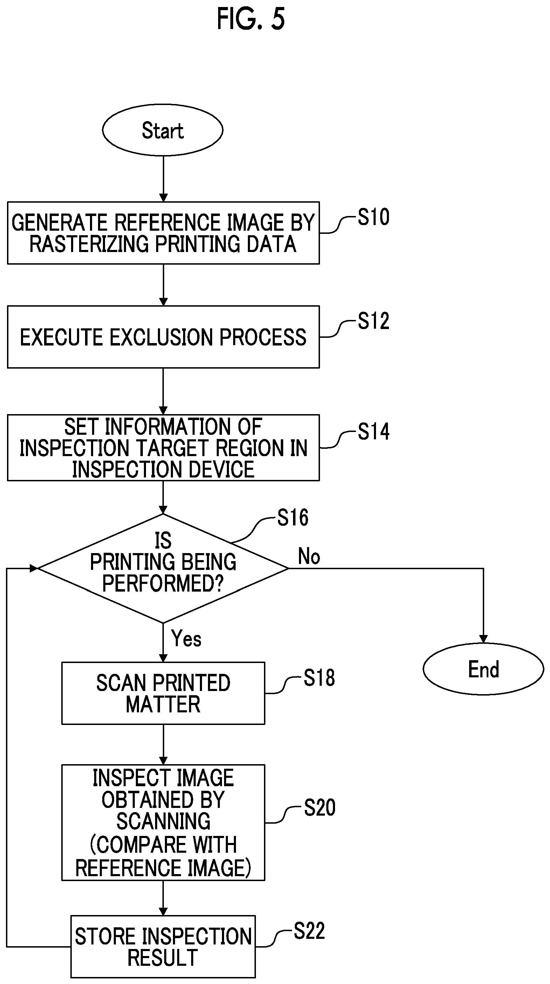

In the system disclosed in JP6432877B, an image forming apparatus is caused to print a color sample covered with a transparent color material and a color sample not covered with the transparent color material, and a correction value is calculated from a difference in a pixel value between images obtained by scanning printing results of the respective color samples. Then, in this system, in a case where the quality of a printing result obtained by printing an input image with the image forming apparatus is inspected, the pixel value of a pixel having the transparent color material in the input image is corrected with the correction value, thereby generating reference data. Then, in the system, the printing quality of the printing result is evaluated by comparing an image obtained by scanning the printing result to the reference data (see Figs. 5, 6, and 7 in the same document).

JP2012-206461A discloses that, in a case where a printing setting of automatically printing text information such as a date and a page number is made, the text information is automatically registered as a target of text inspection for inspecting whether or not the text information is printed correctly.

US 2022/116504 A1 discloses an image inspection apparatus, an image inspection system, an image inspection method, and an image inspection program. An image inspection apparatus includes a designated area acquisition device that acquires information related to an area designated in a recording medium, wherein when trial printing is instructed, a read image of an image printed on the recording medium in the trial printing and an image of the area generated on the basis of the information related to the area acquired by the designated area acquisition device are combined.

JP 2017-163388 A discloses an image processing device. An image processing part performs classification into first print image data due to each color of yellow, magenta, cyan, and black and into second print image data due to each special color of gold, and silver. Though the classified first print image data and second print image data are print image data to the same surface, they undergo print processing by a printing part at respectively different timing. In single-sided print processing, an intermediate printed matter which finishes single-sided printing by using each toner of yellow, magenta, cyan, and black is returned to a printing part on front and back reversal paths (a first round). Since paper is reversed in such a case, the front and back reversal paths are applied again to return the paper to the printing part after undergoing so-called passing through conveyance to a downstream side of a built-in image sensor, and an image is formed by using each toner of gold and silver on the same surface.

### SUMMARY OF THE INVENTION

The present invention is provided by the appended claims. The following disclosure serves a better understanding of the present invention. A glossy region may be formed in a printed matter, depending on a special color material used for printing or a printing mode using the special color material. The value obtained in a case where the glossy region is optically scanned changes greatly depending on, for example, a difference in a fluttering state of paper due to paper transport during the inspection, and this value is much more unstable than a value obtained in a case where a non-glossy region is scanned. This unstableness may cause an error in an inspection result of the printed matter including the glossy region.

An object of the present invention is to prevent an occurrence of an error in an inspection result of a printed matter due to an occurrence of gloss caused by an influence of a specific color material.

According to a first aspect of the present disclosure, there is provided an information processing system including a processor configured to specify a region using a specific color material other than a color material of a basic color, as an exclusion region in an image represented by printing data, and control an inspection device that inspects a printed matter obtained by printing the image, to exclude the specified exclusion region from an inspection target.

According to a second aspect of the present disclosure, there is provided the information processing system according to the first aspect, in which the processor may be configured to specify, as the exclusion region, a region in which printing is performed with the specific color material and the color material of the basic color in a specific order in the region using the specific color material.

According to a third aspect of the present disclosure, there is provided the information processing system according to the first aspect, in which the processor may be configured to, in a case where there is a region in which printing is performed with the specific color material and the color material of the basic color in a specific order, specify an entire page including the region as the exclusion region.

According to a fourth aspect of the present disclosure, there is provided the information processing system according to the second or third aspect, in which the specific color material may be a color material used as a base layer of the color material of the basic color, and the specific order is an order in which printing is performed with the specific color material on a layer of the color material of the basic color with which printing is performed on a medium.

According to a fifth aspect of the present disclosure, there is provided the information processing system according to the fourth aspect, in which the specific color material may be a color material of a white color.

According to a sixth aspect of the present disclosure, there is provided the information processing system according to the second aspect, in which the specific color material may be a transparent color material, and the specific order is an order in which printing is performed with the specific color material on a layer of the color material of the basic color with which printing is performed on a medium.

According to a seventh aspect of the present disclosure, there is provided the information processing system according to the first aspect, in which the specific color material may be a color material of a metallic color or a transparent color material.

According to an eighth aspect of the present disclosure, there is provided the information processing system according to any one of the first to seventh aspects, in which the processor may be configured to detect a designation using a spot color from the printing data, and, in a case where a message indicating that the spot color includes the specific color material is defined in spot color setting information for defining a combination of one or more color materials for expressing the spot color, to specify, as the exclusion region, a region that is an application target of the designation using the spot color in the image.

According to a ninth aspect of the present disclosure, there is provided the information processing system according to any one of the first to eighth aspects, in which the processor may be configured to receive, from a user, a designation indicating that the specific color material is used in printing of the printing data, and a designation of a usage form of the specific color material, and obtain, based on the usage form, a region in which the specific color material is used in the image represented by the printing data, and specify the exclusion region based on the obtained region.

According to a tenth aspect of the present disclosure, there is provided the information processing system according to any one of the first to ninth aspects, in which the processor may be configured to receive, from a user, an input for designating a region as an inspection target in the image represented by the printing data, and to control the inspection device to inspect a remaining portion obtained by excluding the specified exclusion region from the region designated by the input from the user, as the inspection target.

According to an eleventh aspect of the present disclosure, there is provided a program causing a computer to execute a process including specifying a region using a specific color material other than a color material of a basic color, as an exclusion region in an image represented by printing data, and controlling an inspection device that inspects a printed matter obtained by printing the image, to exclude the specified exclusion region from an inspection target.

According to a twelfth aspect of the present disclosure, there is provided an information processing method including specifying a region using a specific color material other than a color material of a basic color, as an exclusion region in an image represented by printing data, and controlling an inspection device that inspects a printed matter obtained by printing the image, to exclude the specified exclusion region from an inspection target.

According to the first, tenth, eleventh, or twelfth aspect of the present disclosure, it is possible to prevent an occurrence of an error in an inspection result of a printed matter due to an occurrence of gloss caused by an influence of a specific color material.

According to the second or third aspect of the present disclosure, it is possible to prevent an occurrence of an error in an inspection result of a printed matter due to an occurrence of gloss caused by performing printing with a specific color material and a color material of a basic color in a specific order.

According to the fourth or fifth aspect of the present disclosure, it is possible to prevent an occurrence of an error in an inspection result of a printed matter due to an occurrence of gloss of a transparent film in a case where it is estimated that printing with a specific color material is performed on the transparent film as a base layer of a color material of a basic color.

According to the sixth aspect of the present disclosure, it is possible to prevent an occurrence of an error in an inspection result of a printed matter due to gloss of a transparent color material.

According to the seventh aspect of the present disclosure, it is possible to prevent an occurrence of an error in an inspection result of a printed matter due to gloss of a color material of a metallic color or a transparent color material.

According to the eighth aspect of the present disclosure, it is possible to prevent an occurrence of an error in an inspection result of a printed matter due to gloss in a case where the gloss occurs by an influence of a specific color material included in a spot color used in printing data.

According to the ninth aspect of the present disclosure, it is possible to prevent an occurrence of an error in an inspection result of a printed matter due to gloss in a case where the gloss occurs by printing in accordance with a designation of using a specific color material and a designation of a usage form for the specific color material.

### BRIEF DESCRIPTION OF THE DRAWINGS

Exemplary embodiment(s) of the present invention will be described in detail based on the following figures, wherein:
Fig. 1 is a diagram illustrating a schematic configuration of a printing and inspection system;
Fig. 2 is a diagram illustrating a functional configuration of an information processing system according to an exemplary embodiment;
Fig. 3 is a diagram illustrating an example of a printing order of plates for a basic color toner and a special toner in a printing device;
Fig. 4 is a diagram illustrating an example of an inspection setting screen;
Fig. 5 is a diagram illustrating a flow of inspection processing performed by the information processing system;
Fig. 6 is a diagram illustrating an example of an exclusion process in the inspection processing;
Fig. 7 is a diagram for describing a stacking state of plates in a case where a color image is printed on a transparent film by using a white toner as a base layer;
Fig. 8 is a diagram illustrating another example of the exclusion process; and
Fig. 9 is a diagram illustrating a hardware configuration of a computer.

### DETAILED DESCRIPTION OF THE INVENTION

### <Overall System Configuration>

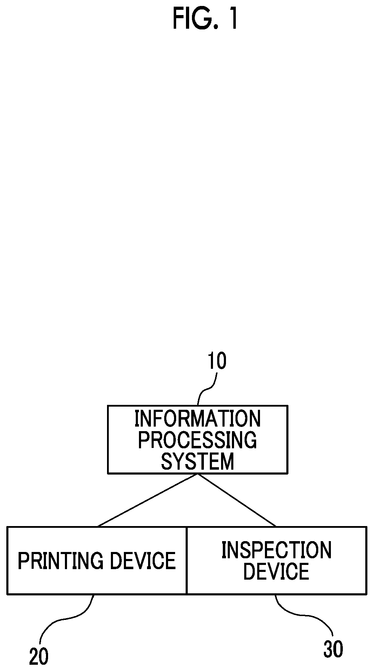

Fig. 1 illustrates the configuration of a printing and inspection system according to the present exemplary embodiment. The printing and inspection system includes an information processing system 10, a printing device 20, and an inspection device 30.

The printing device 20 performs a given printing job and prints a document represented by the printing job on a medium such as paper. The printing job (simply referred to as a "job" below) is data that defines printing to be performed by the printing device 20. For example, the printing job includes printing data in which an image to be printed is described, printing setting data indicating a setting state of various attributes related to printing, or the like. The printing data represents an image as a printing target in a format, for example, a page description language (referred to as a "PDL" below. The PDL is an abbreviation for Page Description Language) format or a portable document format (PDF).

As an example, a case where the printing device 20 uses an electrophotographic method will be described below. Therefore, in the example described below, a color material used for printing in the printing device 20 is a toner. In a case where the printing method of the printing device 20 is other than the electrophotographic method, the printing device 20 uses a color material appropriate for the printing method. For example, in a case where the printing device 20 is an inkjet type, the printing device 20 uses an ink as a color material. As will be understood from the following description, the method in the present exemplary embodiment is not limited to the electrophotographic method, and is also applicable to a case where the printing device 20 is another type (for example, an inkjet type or a type using a printing plate).

The inspection device 30 inspects an image on the surface of a printed matter generated by the printing device 20. The inspection device 30 performs an inspection by scanning the surface of the printed matter with an optical sensor such as a camera or a line sensor and executing a process such as comparison of an image of the scanning result with a reference image. The inspection device 30 may be, for example, a form built in the printing device 20 or a form connected to the printing device 20 such that a printed matter can be received from a paper ejection portion of the printing device 20.

The inspection performed by the inspection device 30 may be conventionally known. For example, the inspection performed by the inspection device 30 may include an inspection for checking whether or not the correct content represented by the job is printed, in terms of contents, or an inspection for checking whether or not there is a stain on a printing result, in terms of printing quality. The inspection in terms of contents includes, for example, an inspection for checking whether a numerical value, a bar code, or the like is printed correctly.

The reference image used in the inspection is an image to be originally formed on the surface of the printed matter. In one example, the reference image is generated, for example, by optically scanning a printed matter that has been confirmed by the human eye to be a correct printing result.

In another example, raster image data generated by rasterizing printing data of a job is used as the reference image. Rasterization is a process of converting printing data described in PDL or the like into raster image data. This method is also applicable to a job of creating a printed matter having different print contents for each printed matter, such as variable printing. In variable printing, the content to be printed in a specific region (there may be a plurality of such regions) in a printed matter changes for each printed matter. The printed matter may be a one-page document or a document consisting of a plurality of pages. In an inspection for the variable printing, the information processing system 10 described later generates reference images indicating the image contents of each printed matter represented by the printing data of a job, and supplies, to the inspection device 30, the reference images corresponding to the respective printed matters, for example, in an order of generating the respective printed matters. The inspection device 30 performs an inspection by comparing an image of a printed matter generated by the printing device 20 to the reference image of this image of the printed matter.

The information processing system 10 controls the printing device 20 to perform printing. The information processing system 10 also controls the inspection device 30 to inspect the printed matter generated by the printing device 20. The information processing system 10 may be configured as an apparatus separate from the printing device 20 and the inspection device 30, or may be built in the printing device 20 or the inspection device 30.

### <Configuration of Information Processing System>

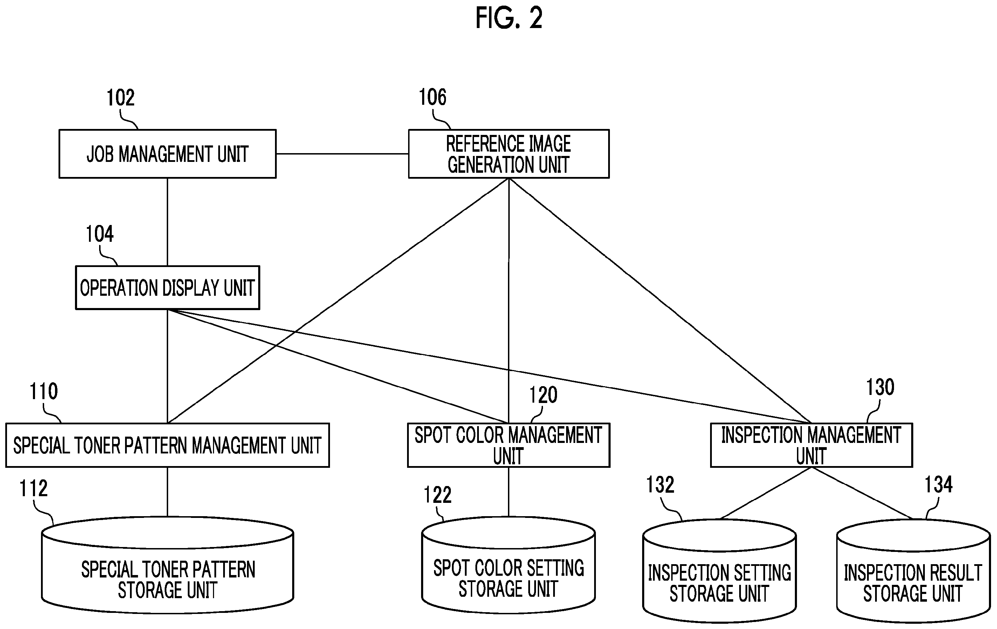

As illustrated in Fig. 2, the information processing system 10 includes a job management unit 102, an operation display unit 104, a special toner pattern management unit 110, a special toner pattern storage unit 112, a spot color management unit 120, a spot color setting storage unit 122, an inspection management unit 130, an inspection setting storage unit 132, and an inspection result storage unit 134.

The job management unit 102 receives an input of job data and manages execution of the job. In the input job data, printing data is converted into raster image data that can be handled by the printing device 20, by an RIP (raster image processor) (not illustrated). The obtained raster image data is supplied to the printing device 20 and used for printing. In order to manage execution of a job, the job management unit 102 also receives an input of an attribute of the job and stores the input attribute. The attributes of a job include, for example, the number of copies, the distinguishment between two-sided printing and single-sided printing, the type of paper to be used, and the like. In this exemplary embodiment, the job management unit 102 may further manage "the name of an inspection setting file used in the job" and "the usage form of the special toner" as the attributes of the job. The attribute of the "name of the inspection setting file used in the job" is an identification name of the inspection setting file used for inspecting the printing result of the job. The attribute of the "usage form of the special toner" is information that defines how the special toner is used in the job. This attribute includes, for example, the type of special toner to be used and data indicating the shape of a pattern drawn with the special toner. In still another example, this attribute may indicate the type of special toner to be used and a target for using the special toner. In this case, the target for using the special toner may be selected, for example, from a predetermined target type such as the entire surface of a page or only a colored portion of a page. This attribute may include information indicating whether to perform top-coating or undercoating with the special toner on a layer of a toner group of the basic color. These attributes are set through an operation screen for setting the job.

The operation display unit 104 is a user interface (UI) of the information processing system 10. The operation display unit 104 includes, for example, a display device that displays the operation screen and an input device that receives an input of a user to the operation screen. The operation display unit 104 may provide an operation screen via a network to a terminal device connected to the information processing system 10 via a network, or acquire an input from the user to the operation screen, from the terminal device via the network.

For example, the operation display unit 104 generates and displays an operation screen for receiving various settings from the user for a job managed by the job management unit 102. In particular, in this exemplary embodiment, the operation display unit 104 provides an operation screen for receiving an input of a usage form of the special toner for the job, an inspection setting file used in the job and the usage form of the inspection setting file, and the like.

The special toner pattern management unit 110 manages a special toner pattern that is a printing pattern of the special toner. The special toner is a toner other than the toner of the basic color, which is used by the printing device 20 for printing.

Here, the basic colors are a plurality of basic colors used by the printing device 20 for full-color printing, and are also referred to as process colors. The basic colors are typically four colors of Y (yellow), M (magenta), C (cyan), and K (black), which are the four primary colors of printing. In addition, there is also a printing device that expands the reproducible color range by using, as the basic colors, six colors, which are obtained by adding two colors such as orange and green to the four colors. The printing device 20 reproduces various colors by changing the mixing ratio of the toners of the basic colors.

On the other hand, there are types of special toners of a gold color, a silver color, white, fluorescent pink, and clear, for example.

The golden or silver toner is used to express a metallic color, that is, a metallic glossy color. Various shades of the metallic color are expressed by using the golden toner or the silver toner in combination with toners of one or more other colors (for example, basic colors) (for example, printing by superimposing the toners). The white toner is used, for example, for printing a white object on a transparent film or colored paper, or for forming a base layer in a case where a color image is printed. The white toner is an example of a color material of a white color. The fluorescent pink toner is used, for example, as a base layer for expressing magenta brighter. The clear (that is, transparent) toner is used, for example, for expressing a glossy feeling or a three-dimensional feeling. For example, by coating the entire page or a specific portion of the page with the clear toner, the portion is made glossy. The clear toner is an example of a transparent color material.

The above descriptions are just examples. The printing device 20 does not need to be capable of using all the exemplified special toners, and may be capable of using special toners other than the exemplified special toners.

The special toner pattern is a pattern expressed by the special toner. Such patterns include, for example, forms and water marks. Data representing the shape of the special toner pattern is stored in a setting file of the special toner pattern. One or more such setting files are stored in the special toner pattern storage unit 112. The user stores the setting file in the special toner pattern storage unit 112, or selects a setting file to be used for a job from the setting files stored in the special toner pattern storage unit 112, through the special toner pattern management unit 110.

The spot color management unit 120 manages spot color data defined by the user. The spot color is defined, for example, as a set of amounts of one or more toners among the basic color toners and the special toners. In a case where the amount of each toner is expressed by 8 bits, that is, in 256 steps including 0, for example, a certain spot color is defined as a combination of the toner amount that means ((Y, M, C, K, gold, silver, white, fluorescent pink) = (0, 127, 0, 32, 0, 256, 0, 0)). A spot color configured by only the toners of the basic colors may be obtained.

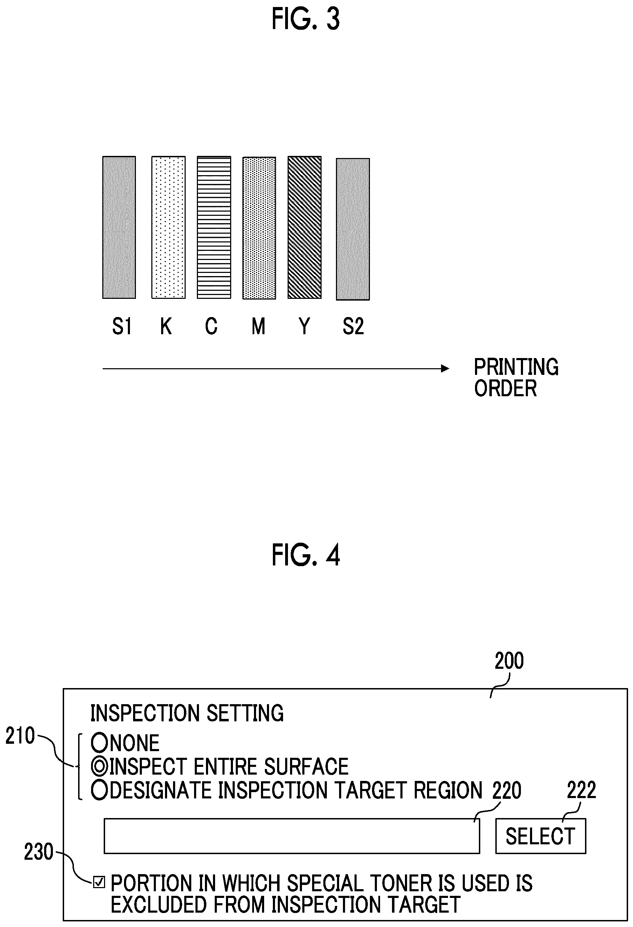

For example, a unique name, that is, a spot color name is assigned by the user, to the spot color of such a definition content. The spot color management unit 120 generates a spot color setting file including data of the spot color name and the definition content input by the user, and stores the spot color setting file in the spot color setting storage unit 122. In the example in which printing is performed by using six plates illustrated in Fig. 3 (details will be described later), the spot color setting file may indicate the amount of toner of each plate of the basic color, and a combination of the types and the amounts of special toners used for the respective plates S1 and S2. The spot color setting file is an example of spot color setting information that defines a combination of one or more color materials expressing a spot color.

In a case where a printing image of the job is drawn, the spot color management unit 120 reads out a spot color setting file corresponding to the spot color name used for the job, from the spot color setting storage unit 122. In drawing a printing image from printing data described in the PDL, the RIP that performs rasterization interprets the color designated by the spot color name in the printing data, in accordance with the spot color setting file.

The inspection management unit 130 manages setting information regarding the inspection performed by the inspection device 30, that is, an inspection setting file. The inspection management unit 130 receives, from the user, a designation of a region set as an inspection target (referred to as a "target region" below), a region excluded from the inspection (referred to as an "exclusion region" below), or both of the target region and the exclusion region, and then generates an inspection setting file representing information of the above regions. The target region and the exclusion region of the inspection are expressed, for example, by a closed curve such as a rectangular shape, a circular shape, an elliptical shape, and a freehand curve. For example, in a case where a partial region of a certain target region is excluded from the inspection, the partial region is set as the exclusion region.

The inspection management unit 130 may, for example, display an image of the page and receive the designation of the target region or the exclusion region via a UI screen that receives the designation of the target region or the exclusion region on the image. The generated inspection setting file is stored in the inspection setting storage unit 132.

The inspection management unit 130 does not necessarily need to receive designations of both the target region and the exclusion region. For example, the inspection management unit 130 may receive only the designation of the exclusion region and set, as the target region for the inspection, a region that does not correspond to the designated exclusion region.

The user selects a file to be applied to the inspection of the printing result of the job from an inspection setting file group stored in the inspection setting storage unit 132. The inspection management unit 130 and the operation display unit 104 provide a UI screen for selection.

In a case where there is a region in which a specific special toner is used in the job, the inspection management unit 130 performs control for excluding the region from the inspection target. That is, even in a region designated as the target region in the inspection setting file used for the inspection of the job, the inspection management unit 130 handles a portion in which the specific special toner is used in this region, as the exclusion region. Since a portion in which the specific special toner is used in the printed matter has gloss, the value of a color obtained by scanning in inspection becomes unstable. Therefore, it is not possible to appropriately inspect such a portion, and thus is excluded from the inspection target. Not all special toners provide gloss. A specific example of which special toner corresponds to the specific special toner that provides gloss will be described later.

The inspection management unit 130 receives data of the inspection result from the inspection device 30, and stores the data in the inspection result storage unit 134.

A reference image generation unit 106 generates a reference image to be used for the inspection. For example, the reference image generation unit 106 generates the reference image by rasterizing the printing data of the job. In a case where the spot color is used in the printing data of the job, the reference image generation unit 106 acquires a spot color setting file corresponding to the spot color name of the spot color from the spot color management unit 120, and decomposes the spot color into each toner component with reference to the acquired file. In a case where the setting of using the special toner pattern is made for the job, the special toner pattern is also printed, and thus the job may be the inspection target. Therefore, the reference image generation unit 106 acquires the setting file of the special toner pattern set in the job from the special toner pattern management unit 110, and draws the special toner pattern as a portion of the reference image in accordance with the setting file.

The reference image generation unit 106 may transmit the image as the printing target, which is generated from the printing data of the job to the printing device 20, and may use the transmitted image as the reference image.

The reference image generation unit 106 generates information of the exclusion region that is excluded from the inspection target, in order to use the specific special toner. The information of the exclusion region is generated, for example, based on the printing data of the job and the spot color setting data corresponding to the spot color name included in the printing data. The information of the exclusion region may be generated based on information of the type or pattern of the special toner indicated in the attribute of the "usage form of the special toner" in the job.

The information of the exclusion region generated by the reference image generation unit 106 is transferred to the inspection management unit 130. The inspection management unit 130 determines the region as the final inspection target to be applied to the printing result of a job by combining the exclusion region generated by the reference image generation unit 106 with the target region or the exclusion region of the inspection, which is indicated by the inspection setting file to be applied to the job.

Next, an example of a printing order of each toner in the printing device 20 will be described with reference to Fig. 3. This is just an example, but, as illustrated in Fig. 3, the printing device 20 performs printing with overlapping six plates in order of the plate S1 for a first special toner, a K plate, a C plate, an M plate, a Y plate, and the plate S2 for a second special toner. That is, the printing device 20 in this example can superimpose the plates of the spot color toner before and after the four plates of the basic colors. Not all of the six plates are printed. The plate used for printing among the six plates is determined in accordance with the content and settings of the job.

Any one of several types of special toners exemplified above is assigned to each of the first and second special toner plates, in accordance with the content and setting of the job. For example, in a case where the white toner is used for the plate for the first special toner and the clear toner is used for the plate for the second special toner, the printing device 20 prints an image of the toner corresponding to each of the plates, in accordance with the setting. In some cases, the plates for the first and second special toners may use the same toner.

Fig. 4 illustrates an inspection setting screen 200 generated by the operation display unit 104. For example, in a case where the user selects the inspection setting from a job setting menu screen provided by the operation display unit 104, the inspection setting screen 200 is displayed.

A selection field 210 displaying three options for inspection is displayed on the inspection setting screen 200 in this example. A radio button is disposed at the left end of each of the three options, and only one of the three options can be selected.

The first option at the top among the three displayed options indicates that the inspection is "not performed". In a case where the first option is selected, the inspection management unit 130 does not perform the inspection on the printing result of the job.

The second option in the middle row indicates that the entire surface of the page is inspected. In a case where the second option is selected, the entire surface of the page is set as the inspection target region. Thus, the inspection management unit 130 performs the inspection on the entire surface of each page in the printing result of the job. The information processing system 10 internally has an inspection setting file in which the entire surface of the page is set as the inspection target region. In a case where the second option is selected as the inspection setting for the job, the information processing system 10 associates the inspection setting file which is internally provided, with the job.

The third option at the bottom indicates that the user designates the inspection target region in the page. An input field 220 for receiving an input of the file name of the inspection setting file is disposed immediately below the third option. In a case where the user selects the third option, the user inputs the file name of the inspection setting file representing the inspection target region, in the input field 220. Further, a selection button 222 is disposed on the right side of the input field 220. In a case where the selection button 222 is pressed by an operation from the user such as a click of a mouse, the operation display unit 104 displays a list of inspection setting files stored in the inspection setting storage unit 132. The user selects the inspection setting file to be applied to the job from the list. In a case where the inspection setting file is selected, the file name of the selected inspection setting file is input to the input field 220. In a case where the third option is selected, the inspection management unit 130 performs the inspection on the target region indicated by the inspection setting file in page of the printing result of the job.

Further, a check box 230 for receiving selection of whether or not to "exclude a portion where the special toner is used, from the inspection target" is displayed on the illustrated inspection setting screen 200. In a case where a check mark is input to the check box 230, the inspection management unit 130 executes a process of excluding the portion in which the special toner is used, from the inspection target region. For example, in a case where the above-described second option is selected and a check mark is input in the check box 230, the inspection management unit 130 sets, as the inspection target region, the remaining region obtained by excluding the portion in which the special toner is used, from the entire surface of the page. Further, in a case where the above-described third option is selected and a check mark is input in the check box 230, the inspection management unit 130 extracts the inspection setting file indicated by the file name in the input field 220. The inspection management unit 130 updates the inspection target region by excluding the portion in which the special toner is used, from the inspection target region indicated by the inspection setting file.

### <Inspection Procedure>

Next, an example of inspection processing performed by the inspection management unit 130 and the inspection device 30 will be described with reference to Fig. 5.

In a case where a job is performed, and an inspection on the job is set, the procedure in Fig. 5 is performed. In an example in which the inspection setting is made on the inspection setting screen 200 illustrated in Fig. 4, the procedure in Fig. 5 is performed in a case where the second or third option in the selection field 210 is selected. In a case where the first option is selected, the inspection processing is not performed.

In the procedure in Fig. 5, the inspection management unit 130 causes the reference image generation unit 106 to rasterize printing data of the job as a performing target (S10). As a result, a reference image for each page of the job is generated.

Then, the inspection management unit 130 executes the exclusion process (S12). The exclusion process is a process of excluding the portion in which the special toner is used, from the inspection target region set in the inspection setting. This exclusion process will be described in detail later. In a case where a check mark is not input to the check box 230 on the inspection setting screen 200, the process of S12 is skipped, and S14 is executed after S10.

In S14, the inspection management unit 130 provides information of the inspection target region to the inspection device 30. The provided information of the target region is information as set by the user in a case where S12 is skipped, and is information after the exclusion process is received in a case where S12 is executed.

For convenience, Fig. 5 illustrates the flow of executing the exclusion process (S12) after the reference image is generated (S10). However, the exclusion process may be executed in parallel with the generation of the reference image, for example, by using information obtained by analyzing the printing data in order to generate the reference image.

Then, the inspection device 30 determines whether or not printing of the job is being performed (S16). In a case where printing is being performed, the inspection device 30 scans the printed matter generated by the printing device 20 (S18), and inspects an image obtained by this scanning (S20). In this inspection, the image obtained by scanning is compared to the reference image, and an inspection result is obtained based on the result of this comparison.

The inspection management unit 130 receives the inspection result for each page requested by the inspection device 30 and stores the inspection result in the inspection result storage unit 134 (S22).

### <Example of Exclusion Process>

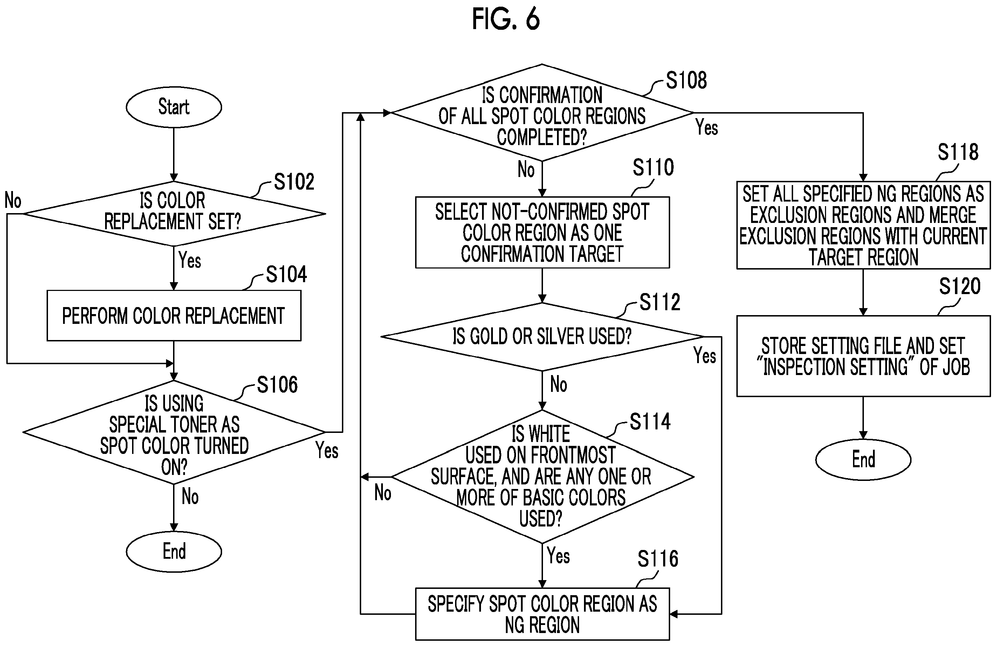

Next, an example of the detailed procedure of the exclusion process in S12 will be described with reference to Fig. 6. In this example, it is assumed that the spot color setting file that defines a spot color is created in advance, and the spot color defined as such is used in a job. Generally speaking, in the procedure in Fig. 6, a region in which a spot color including a specific special toner is used is specified in the job, and the region is excluded from the inspection target. The description will be described below in detail.

In the procedure in Fig. 6, the inspection management unit 130 determines whether or not it is set to apply color replacement to the job by checking the setting information of the job (S102). The color replacement is a process of replacing a designated color in printing data with another color. The color replacement is performed in accordance with color replacement setting information representing a combination of the color as a replacement source and the color as a replacement destination. The color replacement setting information is registered in advance in the printing and inspection system by the user. The color of the replacement source and the color of the replacement destination may be ordinary colors expressed in the CMYK color space or the RGB color space, or may be a spot color designated by the spot color name. In a case where the user wants to apply color replacement to a job, the user makes setting indicating that the color replacement is applied to the job, and designates the color replacement setting information used for a color replacement process, before performing the job. Even in a case where a command for using the spot color is not described in printing data of the job, the spot color may be used in the job due to the color replacement.

In a case where the determination result in S102 is Yes, the inspection management unit 130 performs color replacement on the reference image generated from the printing data (S104). S104 may be executed as a portion of the process of S10 in Fig. 5. That is, in a case where the printing data is rasterized, the reference image generation unit 106 may replace the color of the replacement source in the printing data with the color of the replacement destination in accordance with the color replacement setting information, and then draw the color after the replacement, in a bitmap. With execution of S104, the reference image subjected to color replacement indicated by the color replacement setting information is obtained. In a case where S104 is executed, the processes in and after S106 are executed on an image as a result of performing the color replacement.

In a case where the determination result in S102 is No, S104 is skipped and S106 is executed.

In S106, the inspection management unit 130 determines whether or not the job is set to use the special toner as the spot color (S106). In this example, as one of setting items of the job, there is a setting of whether or not to use the special toner for the spot color. The user sets a value of this setting item before executing the job. In a case where a value indicating that "the special toner is used for the spot color" is set as the value of this setting item, the determination result in S106 is Yes. In this case, any special toner may be used for printing of the job. On the contrary, in a case where a value indicating "the special toner is not used for the spot color" is set in the setting item, the determination result in S106 is No. In this case, the spot color is configured by only the toner of the basic color.

In a case where the determination result in S106 is No, the special toner is not used for printing of the job. Thus, it is not necessary to exclude the portion in which the special toner is used, from the inspection target. In this case, the inspection management unit 130 ends the procedure of Fig. 6 and proceeds to S14 of the procedure of Fig. 5. In this case, the inspection is performed on all the inspection target regions set on the inspection setting screen 200.

In a case where the determination result in S106 is Yes, the inspection management unit 130 executes a confirmation process for a spot color region from the reference image, that is, the processes of S108 to S116.

In the confirmation process, the inspection management unit 130 determines whether or not confirmation of all spot color regions in the reference image has been completed (S108). It is possible to specify the spot color region in the reference image, for example, by referring to the printing data. That is, for example, in the printing data, a region in which a color is designated by the spot color name is the spot color region.

In a case where the determination result in S108 is No, the inspection management unit 130 selects one region of which the confirmation has not yet been completed among the spot color regions, as a confirmation target (S110). Then, the inspection management unit 130 determines whether or not the color in the region selected in S110 uses the golden toner or the silver toner (S112). In S112, the inspection management unit 130 may determine, for example, whether or not the value of a pixel in this region includes a value more than zero as the amount of the golden toner or the silver toner. Further, as another example, the inspection management unit 130 may determine whether or not data for designating the drawing color of the region in the printing data includes a value more than zero as the amount of the golden toner or the silver toner.

In a case where the determination result in S112 is Yes, that is, in a case where the golden or silver toner is used as the color of the region, the inspection management unit 130 specifies this region as an NG (that is, defective) region (S116). Since the golden toner and the silver toner are glossy toners, it is difficult to obtain stable and reliable inspection results even though a region using such toners is inspected by the inspection device 30. Therefore, the region is excluded from the inspection target as an NG region. After S116, the inspection management unit 130 returns to the process of S108.

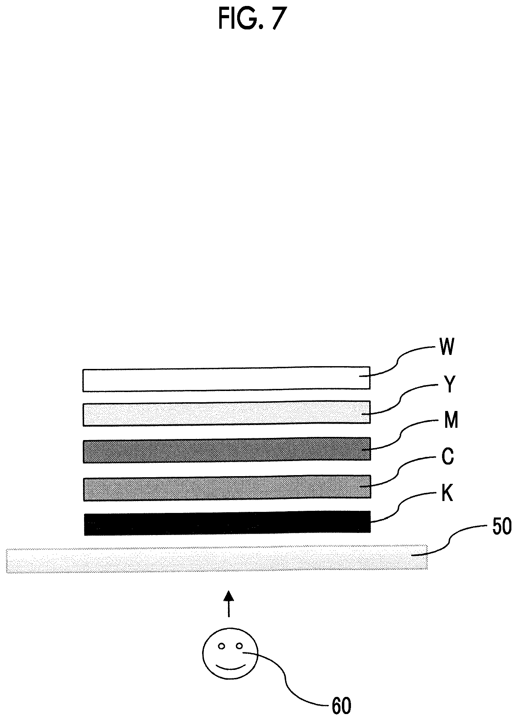

In a case where the determination result in S112 is No, the inspection management unit 130 determines whether or not the color of the region selected in S110 uses the white toner in the frontmost surface and uses any one or more of the basic colors (S114). Here, the frontmost surface is a plate in which the printing order on a medium (for example, paper or a transparent film) is the last, in other words, is a plate on the side farthest from a medium among a plurality of plates stacked on the medium. In a case where the determination result in S114 is Yes, it is considered that color printing with white as the base layer is performed on the transparent film. Fig. 7 schematically illustrates such a printing state.

In the example illustrated in Fig. 7, printing is performed with plates in the order of K, C, M, Y, and W on the surface of a transparent film 50. The W plate is the plate of a white toner. This printed matter is assumed to be viewed by an observer 60 from a side of both sides of the transparent film 50, which is opposite to the side on which the printing is performed. An arrow from the observer 60 to the transparent film 50 indicates a direction of the line of sight of the observer 60. In a case of being viewed from the observer 60, this printed matter has favorable color development because a full-color image is printed on the W plate, that is, the base layer coated with the white toner. Since the surface of the transparent film 50 has gloss, the observer 60 observes the glossy image.

The information processing system 10 has a function of receiving a setting for printing such a base layer of the white toner as a job setting.

In S114, for example, the inspection management unit 130 may determine whether or not the component corresponding to the frontmost plate in the value of the pixel in the region indicates the white toner. For example, a case of using the printing device 20 capable of performing printing with the plates S1 and S2 of the special toner before and after K, C, M, and Y illustrated in Fig. 3 is considered. In this case, in a case where the component of the frontmost plate S1 among the values of the pixels indicates the white toner, the determination result of S114 is Yes. In a case where the component is other than the white toner, the determination result of S114 is No. As another example, the inspection management unit 130 may determine whether or not the setting information of the job includes a setting of performing printing on the region with the white toner as the base layer. In a case where the determination result is Yes, the determination result in S114 is Yes.

The inspection device 30 performs the inspection from the same viewpoint as the observer 60. Therefore, the gloss of the transparent film 50 makes it difficult to perform an appropriate inspection. Thus, in the procedure in Fig. 6, in a case where the determination result in S114 is Yes, the inspection management unit 130 specifies this region as the NG region. After S116, the inspection management unit 130 returns to the process of S108.

In a case where the determination result in S114 is No, the inspection management unit 130 skips S116 and returns to the process of S108.

In a case where the processes of S110 to S116 are repeated in this manner and the confirmation of all the spot color regions in the reference image has been completed, the determination result in S108 is Yes. In this case, the inspection management unit 130 sets all the NG regions specified so far as the exclusion regions and merges the exclusion regions with the current target regions (S118). In a case where the option of "inspecting the entire surface" is selected as the inspection setting for the job (for example, referring to the inspection setting screen 200 in Fig. 4), the current target region at the start point of S118 is the entire surface of the page. In this case, in S118, the inspection management unit 130 excludes, from the entire surface of the page, a portion overlapping each exclusion region specified by repeating S110 to S116, and thus the region remaining without being excluded is the final inspection target region for the job. Further, in a case where the option of "specifying the inspection target region" is selected as the inspection setting, and the inspection setting file to be used is designated, the current target region at the start point of S118 is determined by the target region and the exclusion region indicated in the inspection setting file. In this case, in S118, the inspection management unit 130 excludes a portion overlapping each exclusion region specified by repeating S110 to S116, from the target region determined by the inspection setting file. The region remaining without being excluded is the final inspection target region for the job.

After S118, the inspection management unit 130 controls the inspection device 30 by storing the information of the merging result in S118 as the inspection setting file used for the job and transferring the inspection setting file to the inspection device 30 (S120). The inspection processing performed by the inspection device 30 is controlled in accordance with the inspection setting file. That is, the inspection device 30 specifies the inspection target region from the received inspection setting file, and performs the inspection on the specified target region in the printing result. In addition, the inspection setting file stored at this time is referred to a case where the target region inspected in this job is verified later.

### <Another Example of Exclusion Process>

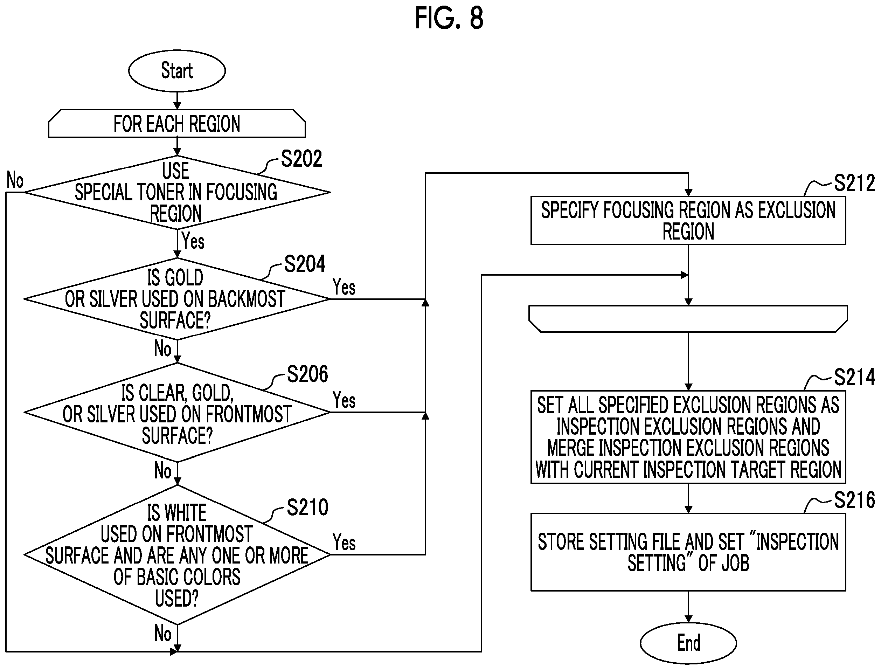

As described above, the procedure of S12 (that is, the exclusion process) in Fig. 5 has been described with reference to Fig. 6. Next, another example of the exclusion process will be described with reference to Fig. 8. The procedure illustrated in Fig. 8 is an example in a case where it is assumed that the user designates the special toner to be used and the usage form of the special toner as the setting items of the job.

This is just an example, but here, four types of special toners as follows are assumed to be used as the usage form of the special toner.

The first type is a form used as a special toner pattern. The information processing system 10 can receive a setting of performing printing with the special toner pattern, as a job setting. With this setting, the information processing system 10 receives a selection of a special toner pattern setting file to be used in this job among one or more special toner pattern setting files stored in the special toner pattern storage unit 112. The information processing system 10 also receives settings such as the type and density of the special toner used for printing the special toner pattern. The printing device 20 prints the special pattern in accordance with the received settings.

The second type is a form in which the special toner is used for a portion of a specific color. An example of this usage form is a case where color printing is performed on a base layer of the white toner. For example, in the case of printing on colored paper, a base of the white toner is printed first (that is, on the S1 plate in the example of Fig. 3), and printing is performed on the base with each plate in the order of K, C, M, and Y. On the other hand, in the case of printing on a transparent film, printing is performed with each plate of K, C, M, and Y, and, in this state, the base layer of the white toner is printed as the frontmost plate. Further, in another example of the second type, a portion of a specific color in page may be coated with the clear toner.

In a case where the information processing system 10 receives the setting of using the second type of usage form, the information processing system 10 receives the designation of the specific color as a use destination of the special toner. In this designation, for example, the specific color may be specified by a combination of values of the respective components of K, C, M, and Y. In this case, in a case where the values of all four components are set to 0, the colorless portion is designated as the use destination of the special toner. Further, instead of one specific color, a specific color range may be designated as the use destination of the special toner. The range in this case may be designated as a combination of range of values of the respective components of K, C, M, and Y. Further, the entire colored portion, that is, all the pixels in which one or more component among K, C, M, and Y is more than zero may be designated as the use destination of the special toner.

The third type is a form in which the special toner is used for a specific type of a printing object. Examples of the type of the printing object as the use destination of the special toner include text, lines, figures subjected to shading or solid coating (that is, printing in a uniform color in a region), and a bitmap image. In a case where the information processing system 10 receives the setting of using this third type of usage form, the information processing system 10 presents options of an object type set as the use destination of the special toner, such as text, lines, and a bitmap image. In addition, the information processing system 10 receives the selection from the options. Similar to the second usage form, the third usage form is used in a case where the white toner is used for the base layer or a case where coating is performed with the clear toner.

The fourth type is a form in which the special toner is used on the entire surface of the page. Similar to the second or third usage form, this form is also used in a case where the white toner is used as the base layer and a case where the coating is performed with the clear toner.

The information processing system 10 receives, as an item of the job setting, an input of whether or not the each of the frontmost plate S2 and the backmost plate S1 (see Fig. 3). In addition, in a case where the special toner is used, the information processing system 10 receives, as items of the job setting, the special toner to be used and the usage form of the special toner.

S202 to S212 in the procedure illustrated in Fig. 8 are executed for each region in the page. Each region is, for example, one printing object drawn by a drawing command in printing data.

In the procedure in Fig. 8, the inspection management unit 130 selects one of the regions in the page as a focusing region, and determines whether or not the special toner is used for the focusing region (S202). At this time, the inspection management unit 130 may determine whether or not the focusing region corresponds to the condition of the use destination of the special toner set in the job. For example, in a case where a setting of using a certain special toner in a portion of a specific color (that is, second usage form described above) is made, the inspection management unit 130 may determine whether or not the color in the focusing region is the specific color. In a case where a plurality of settings of using the special toner are set for the job, in S202, for each of the settings, the inspection management unit 130 determines whether or not the focusing region satisfies the condition of the use destination of the special toner in the setting. In a case where the focusing region satisfies the condition related to one or more of the settings, the determination result in S202 is Yes.

In a case where the determination result in S202 is Yes, the inspection management unit 130 performs determinations of S204, S206, and S208. The order of the three determinations is not particularly limited and is not limited to the illustrated order. The three determinations will be described below.

The inspection management unit 130 determines whether or not the golden toner or the silver toner is used for the backmost plate in printing of the focusing region (S204). The backmost plate is the plate closest to the medium among a plurality of stacked plates. For example, in a case where a setting of undercoating the focusing region with the golden toner is made, the determination result in S204 is Yes. In a case where the determination result in S204 is Yes, the printing result in the focusing region has gloss due to the golden toner or the silver toner, and thus the focusing region needs to be excluded from the inspection.

Further, the inspection management unit 130 determines whether or not the clear toner, the golden toner, or the silver toner is used for the frontmost plate in printing of the focusing region (S206). For example, in a case where the focusing region is overcoated with the clear toner, the determination result in S206 is Yes. In a case where the determination result in S206 is Yes, the printing result in the focusing region has gloss, and thus the focusing region needs to be excluded from the inspection. In a case where there is a region on which printing with the clear toner is performed on the backmost surface, printing with the toner of the basic color is performed on the clear toner in this region. Since the clear toner as the base does not bring gloss to the color image obtained by the toner of the basic color on the clear toner, it is not necessary to exclude this region from the inspection target.

The inspection management unit 130 determines whether or not the white toner is used in the frontmost surface and any one or more of the basic colors is used in the printing of the focusing region (S210). This determination is the same as the determination in S114 in the procedure in Fig. 6. In a case where the determination result is Yes, the focusing region is estimated to be a region in which color printing is performed on the transparent film with the white toner as the base layer. In this case, the printing result of the focusing region has gloss due to the transparent film, and therefore the focusing region needs to be excluded from the inspection.

In a case where the determination result in any one of S204 to S210 is Yes, the inspection management unit 130 specifies the focusing region as the exclusion region (S212). In a case where the inspection management unit 130 ends the processes of S202 to S212 for all the regions in the page, the inspection management unit 130 merges all exclusion regions specified so far with the current target region (S214). The merging process of S214 is identical to the process of S118 in the procedure in Fig. 6. The region remaining without being excluded in S214 is the final inspection target region for the job. The inspection management unit 130 controls the inspection device 30 by storing the information of the merging result in S214 as the inspection setting file used for the job and transferring the inspection setting file to the inspection device 30 (S216). The inspection setting file stored at this time is referred to a case where the target region inspected in this job is verified later.

### <Summary of Exclusion Process>

In the above-described example, among the special toners, the golden toner, the silver toner, and the clear toner have gloss. In the present exemplary embodiment, the region where the special toners are used is excluded, as the exclusion region, from the inspection target. In this sense, the special toners are an example of a specific color material for which the region used is the exclusion region.

In a case where the printing device 20 uses a toner having gloss other than the golden toner, the silver toner, and the clear toner, the information processing system 10 may also set a region in which such a toner is used, as the exclusion region. For example, in a case where there is a special toner having a metallic color other than gold and silver, the information processing system 10 may exclude a region in which such a special toner is used, from the inspection target.

Further, in a case where the white toner is used for the base layer for printing a color image on a transparent film, the image as the printing result has gloss. Thus, in the present exemplary embodiment, a region of such a usage form is excluded from the inspection target. On the other hand, in a usage form in which the white toner is used as the base layer for color printing on colored paper, gloss does not occur only in this usage form, unlike a case where printing is performed on a transparent film. Therefore, since the region of this usage form can be appropriately inspected, the region is not excluded from the inspection target. Even in a case where the white toner is used for the same base layer, the printing order of the white toner with respect to the basic colors is different between the transparent film and the colored paper. In the former, the white toner is the frontmost surface (that is, printed after the basic colors), whereas in the latter, the white toner is the backmost surface (that is, printed before the basic colors). Therefore, it is possible to determine whether the printing destination is the transparent film or the colored paper by checking the printing order of the white toner with respect to the basic colors.

The region in which the determination result of S114 in the procedure of Fig. 6 is Yes and the region in which the determination result of S210 in the procedure of Fig. 8 is Yes are an example of regions in which printing with the specific color material is performed in a specific order with respect to the basic colors. In the present exemplary embodiment, such a region is excluded from the inspection target.

In addition, some special toners do not have gloss and are not used for the base layer for printing on a transparent film. A region in which such a special toner is used is not an exclusion target by the procedure illustrated in Figs. 6 and 8. For example, the fluorescent pink toner is an example of such a special toner. The fluorescent pink toner is used on the backmost surface (for example, the S1 plate of Fig. 3) in order to brighten magenta. In this usage form, a reference image can be created within a range of normal brightness correction. Therefore, the region in which the fluorescent pink toner is used is not excluded from the inspection only by this region.

The region in which printing with the fluorescent pink toner is performed on the transparent film as the base layer of one or more basic colors including magenta may be excluded from the inspection target, similar to the region in which printing with the white toner is performed on the transparent film as the base layer of the basic colors. The region in which printing with the fluorescent pink toner is performed on the transparent film as the base layer of one or more basic colors including magenta may be determined in the similar manner to in S114 or S210.

The inspection management unit 130 can use the procedure in Fig. 6 and the procedure in Fig. 8 in combination. In a case where the spot color set in the spot color setting file is used in the printing data of the job, and the special toner to be used and the usage form are set for the job, the inspection management unit 130 performs the procedure of Fig. 6 and the procedure of Fig. 8. The inspection management unit 130 obtains the final inspection target region to be applied to a job, by excluding both all the NG regions specified in S116 in Fig. 6 and all the exclusion regions specified in S212 in Fig. 8, from the inspection target region set for the job.

In the procedure of Fig. 6 and the procedure of Fig. 8, in a case where the determination result of S114 or S210 is Yes for a certain region, this region is excluded from the inspection target, but this is only an example. As another example, in such a case, the entire page including this region may be excluded from the inspection target. This is because, in a case where the determination result in S114 or S210 is Yes, it is estimated that the medium as a printing destination of the job is the transparent film, and thus a range other than this region has gloss.

### <Example of Hardware Configuration of Information Processing System>

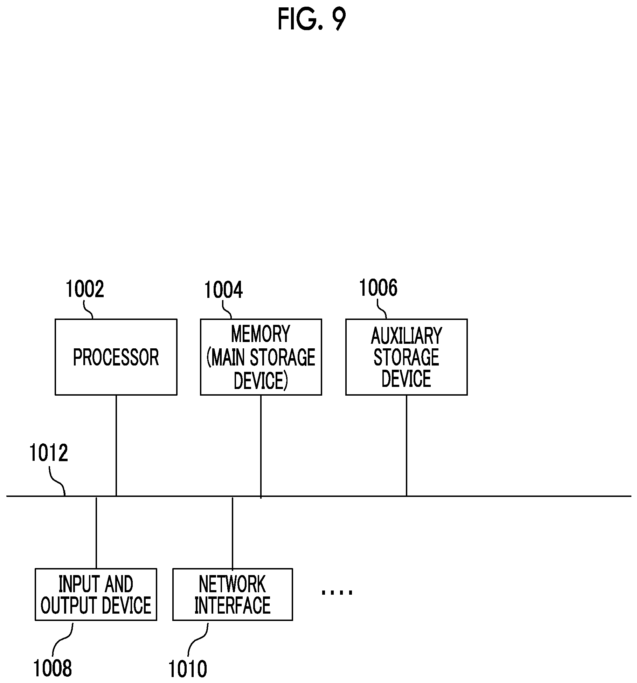

The information processing system 10 described above is configured by using, for example, a general-purpose computer. For example, as illustrated in Fig. 9, the computer has a circuit configuration in which the following elements are connected via a data transmission path such as a bus 1012. The elements include: a processor 1002; a memory (main storage device) 1004 such as a random access memory (RAM); a controller that controls an auxiliary storage device 1006 that is a non-volatile storage device such as a flash memory, a solid state drive (SSD), or a hard disk drive (HDD); an interface with various input and output devices 1008; a network interface 1010 that performs control for connection with a network such as a local area network; and the like. A program describing the content of the processing of the above-described exemplary embodiment is installed in the computer through the network or the like and stored in the auxiliary storage device 1006. The information processing mechanism in the present exemplary embodiment is configured by executing the program which is stored in the auxiliary storage device 1006 by the processor 1002 using the memory 1004.

Further, the information processing system 10 may be configured by a single computer or a plurality of computers. For example, some functions of the information processing system 10 may be provided in a computer built in the printing device 20 or the inspection device 30, or another computer.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

10: information processing system
20: printing device
30: inspection device
102: job management unit
104: operation display unit
106: reference image generation unit
110: special toner pattern management unit
112: special toner pattern storage unit
120: spot color management unit
122: spot color setting storage unit
130: inspection management unit
132: inspection setting storage unit
134: inspection result storage unit

## Claims

1. An information processing system (10) comprising:
a processor (1002) configured to:
specify a region using a specific color material other than a color material of a basic color, as an exclusion region in an image represented by printing data; and
control an inspection device (30) that inspects a printed matter obtained by printing the image, to exclude the specified exclusion region from an inspection target,
**characterized in that** the processor (1002) is further configured to:
detect a designation using a spot color from the printing data; and
in a case where a message indicating that the spot color includes the specific color material is defined in spot color setting information for defining a combination of one or more color materials for expressing the spot color, specify, as the exclusion region, a region that is an application target of the designation using the spot color in the image.

2. The information processing system (10) according to claim 1, wherein the processor (1002) is configured to:
specify, as the exclusion region, a region in which printing is performed with the specific color material and the color material of the basic color in a specific order in the region using the specific color material.

3. The information processing system (10) according to claim 1, wherein the processor (1002) is configured to:
in a case where there is a region in which printing is performed with the specific color material and the color material of the basic color in a specific order, specify an entire page including the region as the exclusion region.

4. The information processing system (10) according to claim 2 or 3,
wherein the specific color material is a color material used as a base layer of the color material of the basic color, and
the specific order is an order in which printing is performed with the specific color material on a layer of the color material of the basic color with which printing is performed on a medium.

5. The information processing system (10) according to claim 4,
wherein the specific color material is a color material of a white color.

6. The information processing system (10) according to claim 2,
wherein the specific color material is a transparent color material, and
the specific order is an order in which printing is performed with the specific color material on a layer of the color material of the basic color with which printing is performed on a medium.

7. The information processing system (10) according to claim 1,
wherein the specific color material is a color material of a metallic color or a transparent color material.

8. The information processing system (10) according to any one of 1 to 7, wherein the processor is configured to:
receive, from a user, a designation indicating that the specific color material is used in printing of the printing data, and a designation of a usage form of the specific color material; and
obtain, based on the usage form, a region in which the specific color material is used in the image represented by the printing data, and specify the exclusion region based on the obtained region.

9. The information processing system (10) according to any one of 1 to 8, wherein the processor is configured to:
receive, from a user, an input for designating a region as the inspection target in the image represented by the printing data; and
control the inspection device (30) to inspect a remaining portion obtained by excluding the specified exclusion region from the region designated by the input from the user, as the inspection target.

10. A program comprising instructions that, when executed in a computer, make said computer to execute a process comprising:
specifying a region using a specific color material other than a color material of a basic color, as an exclusion region in an image represented by printing data; and
controlling an inspection device (30) that inspects a printed matter obtained by printing the image, to exclude the specified exclusion region from an inspection target,
**characterized in that** the process further comprises:
detecting a designation using a spot color from the printing data; and
in a case where a message indicating that the spot color includes the specific color material is defined in spot color setting information for defining a combination of one or more color materials for expressing the spot color, specifying, as the exclusion region, a region that is an application target of the designation using the spot color in the image.

11. An information processing method comprising:
specifying a region using a specific color material other than a color material of a basic color, as an exclusion region in an image represented by printing data; and
controlling an inspection device (30) that inspects a printed matter obtained by printing the image, to exclude the specified exclusion region from an inspection target,
**characterized in that** the information processing method further comprises:
detecting a designation using a spot color from the printing data; and
in a case where a message indicating that the spot color includes the specific color material is defined in spot color setting information for defining a combination of one or more color materials for expressing the spot color, specifying, as the exclusion region, a region that is an application target of the designation using the spot color in the image.

## Patentansprüche

1. Informationsverarbeitungssystem (10), umfassend:
einen Prozessor (1002), der so konfiguriert ist, dass er:
einen Bereich unter Verwendung eines spezifischen Farbmaterials, das von einem Farbmaterial einer Grundfarbe verschieden ist, als einen Ausschlussbereich in einem Bild, das durch Druckdaten dargestellt wird, spezifiziert; und
eine Inspektionsvorrichtung (30), die eine gedruckte Ausgabe, die durch Drucken des Bildes erhalten wird, inspiziert, so steuert, dass der spezifizierte Ausschlussbereich von einem Inspektionsziel ausgeschlossen wird,
**dadurch gekennzeichnet, dass** der Prozessor (1002) ferner so konfiguriert ist, dass er:
eine Bezeichnung unter Verwendung einer Sonderfarbe aus den Druckdaten detektiert; und
in einem Fall, in dem eine Nachricht, die angibt, dass die Sonderfarbe das spezifische Farbmaterial enthält, in Sonderfarben-Einstellinformationen zum Definieren einer Kombination aus einem oder mehreren Farbmaterialien zum Ausdrücken der Sonderfarbe definiert ist, als den Ausschlussbereich einen Bereich, der ein Anwendungsziel der Bezeichnung unter Verwendung der Sonderfarbe in dem Bild ist, spezifiziert.

2. Informationsverarbeitungssystem (10) nach Anspruch 1, wobei der Prozessor (1002) so konfiguriert ist, dass er:
einen Bereich, in dem Drucken mit dem spezifischen Farbmaterial und dem Farbmaterial der Grundfarbe in einer spezifischen Reihenfolge in dem Bereich unter Verwendung des spezifischen Farbmaterials durchgeführt wird, als den Ausschlussbereich spezifiziert.

3. Informationsverarbeitungssystem (10) nach Anspruch 1, wobei der Prozessor (1002) so konfiguriert ist, dass er:
in einem Fall, in dem es einen Bereich gibt, in dem Drucken mit dem spezifischen Farbmaterial und dem Farbmaterial der Grundfarbe in einer spezifischen Reihenfolge durchgeführt wird, eine gesamte Seite einschließlich des Bereichs als den Ausschlussbereich spezifiziert.

4. Informationsverarbeitungssystem (10) nach Anspruch 2 oder 3,
wobei das spezifische Farbmaterial ein Farbmaterial ist, das als Basisschicht des Farbmaterials der Grundfarbe verwendet wird, und
die spezifische Reihenfolge eine Reihenfolge ist, bei der Drucken mit dem spezifischen Farbmaterial auf einer Schicht des Farbmaterials der Grundfarbe, mit der Drucken auf einem Medium durchgeführt wird.

5. Informationsverarbeitungssystem (10) nach Anspruch 4,
wobei das spezifische Farbmaterial ein Farbmaterial einer weißen Farbe ist.

6. Informationsverarbeitungssystem (10) nach Anspruch 2,
wobei das spezifische Farbmaterial ein transparentes Farbmaterial ist, und
die spezifische Reihenfolge eine Reihenfolge ist, bei der Drucken mit dem spezifischen Farbmaterial auf einer Schicht des Farbmaterials der Grundfarbe, mit der Drucken auf einem Medium durchgeführt wird.

7. Informationsverarbeitungssystem (10) nach Anspruch 1,
wobei das spezifische Farbmaterial ein Farbmaterial einer metallischen Farbe oder ein transparentes Farbmaterial ist.

8. Informationsverarbeitungssystem (10) nach einem der Ansprüche 1 bis 7, wobei der Prozessor so konfiguriert ist, dass er:
von einem Benutzer eine Bezeichnung, die angibt, dass das spezifische Farbmaterial bei Drucken der Druckdaten verwendet wird, und eine Bezeichnung einer Verwendungsform des spezifischen Farbmaterials empfängt; und
auf der Grundlage der Nutzungsform einen Bereich, in dem das spezifische Farbmaterial in dem Bild, das durch die Druckdaten dargestellt wird, verwendet wird, erhält und den Ausschlussbereich auf der Grundlage des erhaltenen Bereichs spezifiziert.

9. Informationsverarbeitungssystem (10) nach einem der Ansprüche 1 bis 8, wobei der Prozessor so konfiguriert ist, dass er:
von einem Benutzer eine Eingabe zum Designieren eines Bereichs als das Inspektionsziel in dem Bild, das durch die Druckdaten dargestellt wird, empfängt; und
die Inspektionsvorrichtung (30) steuert, um einen verbleibenden Abschnitt, der durch Ausschließen des spezifizierten Ausschlussbereichs von dem durch die Eingabe von dem Benutzer designierten Bereich erhalten wird, als das Inspektionsziel zu inspizieren.

10. Programm, das Anweisungen umfasst, die, wenn sie in einem Computer ausgeführt werden, diesen Computer veranlassen, einen Prozess auszuführen, der umfasst:
Spezifizieren eines Bereichs unter Verwendung eines spezifischen Farbmaterials, das von einem Farbmaterial einer Grundfarbe verschieden ist, als einen Ausschlussbereich in einem Bild, das durch Druckdaten dargestellt wird; und
Steuern einer Inspektionsvorrichtung (30), die eine gedruckte Ausgabe, die durch Drucken des Bildes erhalten wird, inspiziert, um den spezifizierten Ausschlussbereich von einem Inspektionsziel auszuschließen,
**dadurch gekennzeichnet, dass** der Prozess ferner umfasst:
Detektieren einer Bezeichnung unter Verwendung einer Sonderfarbe aus den Druckdaten; und
Spezifizieren eines Bereichs, der ein Anwendungsziel der Bezeichnung unter Verwendung der Sonderfarbe in dem Bild ist, als den Ausschlussbereich in einem Fall, in dem eine Nachricht, die angibt, dass die Sonderfarbe das spezifische Farbmaterial enthält, in Sonderfarben-Einstellinformationen zum Definieren einer Kombination aus einem oder mehreren Farbmaterialien zum Ausdrücken der Sonderfarbe definiert ist.

11. Informationsverarbeitungsverfahren, umfassend:
Spezifizieren eines Bereichs unter Verwendung eines spezifischen Farbmaterials, das von einem Farbmaterial einer Grundfarbe verschieden ist, als einen Ausschlussbereich in einem Bild, das durch Druckdaten dargestellt wird; und
Steuern einer Inspektionsvorrichtung (30), die eine gedruckte Ausgabe, die durch Drucken des Bildes erhalten wird, inspiziert, um den spezifizierten Ausschlussbereich von einem Inspektionsziel auszuschließen,
**dadurch gekennzeichnet, dass** das Informationsverarbeitungsverfahren ferner umfasst:
Detektieren einer Bezeichnung unter Verwendung einer Sonderfarbe aus den Druckdaten; und
Spezifizieren eines Bereichs, der ein Anwendungsziel der Bezeichnung unter Verwendung der Sonderfarbe in dem Bild ist, als den Ausschlussbereich in einem Fall, in dem eine Nachricht, die angibt, dass die Sonderfarbe das spezifische Farbmaterial enthält, in Sonderfarben-Einstellinformationen zum Definieren einer Kombination aus einem oder mehreren Farbmaterialien zum Ausdrücken der Sonderfarbe definiert ist.

## Revendications

1. Système de traitement d'informations (10) comprenant :
un processeur (1002) configuré pour :
spécifier une région utilisant un matériau colorant spécifique autre qu'un matériau colorant d'une couleur de base, comme une région d'exclusion dans une image représentée par des données d'impression ; et
contrôler un dispositif d'inspection (30) qui inspecte une imprimé obtenu en imprimant l'image, pour exclure la région d'exclusion spécifiée d'une cible d'inspection,
**caractérisé en ce que** le processeur (1002) est en outre configuré pour :
détecter une désignation utilisant une couleur spéciale à partir des données d'impression ; et
dans un cas où un message indiquant que la couleur spéciale inclut le matériau colorant spécifique est défini dans des informations de configuration de couleur spéciale pour définir une combinaison d'un ou plusieurs matériaux de couleur pour exprimer la couleur spéciale, spécifier, comme la région d'exclusion, une région qui est une cible d'application de la désignation utilisant la couleur spéciale dans l'image.

2. Système de traitement d'informations (10) selon la revendication 1, dans lequel le processeur (1002) est configuré pour :
spécifier, comme la région d'exclusion, une région dans laquelle l'impression est effectuée avec le matériau colorant spécifique et le matériau colorant de la couleur de base dans un ordre spécifique dans la région utilisant le matériau colorant spécifique.

3. Système de traitement d'informations (10) selon la revendication 1, dans lequel le processeur (1002) est configuré pour :
dans un cas où il existe une région dans laquelle l'impression est effectuée avec le matériau colorant spécifique et le matériau colorant de la couleur de base dans un ordre spécifique, spécifier une page entière incluant la région comme la région d'exclusion.

4. Système de traitement d'informations (10) selon la revendication 2 ou la revendication 3,
dans lequel le matériau colorant spécifique est un matériau colorant utilisé comme une couche de base du matériau colorant de la couleur de base, et
l'ordre spécifique est un ordre dans lequel l'impression est effectuée avec le matériau colorant spécifique sur une couche du matériau colorant de la couleur de base avec laquelle l'impression est effectuée sur un support.

5. Système de traitement d'informations (10) selon la revendication 4,
dans lequel le matériau colorant spécifique est un matériau colorant de couleur blanche.

6. Système de traitement d'informations (10) selon la revendication 2,
dans lequel le matériau colorant spécifique est un matériau colorant transparent, et
l'ordre spécifique est un ordre dans lequel l'impression est effectuée avec le matériau colorant spécifique sur une couche du matériau colorant de la couleur de base avec laquelle l'impression est effectuée sur un support.

7. Système de traitement d'informations (10) selon la revendication 1,
dans lequel le matériau colorant spécifique est un matériau colorant de couleur métallique ou un matériau colorant transparent.

8. Système de traitement d'informations (10) selon l'une quelconque des revendications 1 à 7, dans lequel le processeur est configuré pour :
recevoir, d'un utilisateur, une désignation indiquant que le matériau colorant spécifique est utilisé dans l'impression des données d'impression, et une désignation d'une forme d'utilisation du matériau colorant spécifique ; et
obtenir, sur la base de la forme d'utilisation, une région dans laquelle le matériau colorant spécifique est utilisé dans l'image représentée par les données d'impression, et spécifier la région d'exclusion sur la base de la région obtenue.

9. Système de traitement d'informations (10) selon l'une quelconque des revendications 1 à 8, dans lequel le processeur est configuré pour :
recevoir, d'un utilisateur, une entrée pour désigner une région comme la cible d'inspection dans l'image représentée par les données d'impression ; et
contrôler le dispositif d'inspection (30) pour inspecter une portion restante obtenue en excluant la région d'exclusion spécifiée de la région désignée par l'entrée de l'utilisateur, comme la cible d'inspection.

10. Programme comprenant des instructions qui, lorsqu'elles sont exécutées sur un ordinateur, amènent ledit ordinateur à exécuter un processus comprenant :
spécifier une région utilisant un matériau colorant spécifique autre qu'un matériau colorant d'une couleur de base, comme une région d'exclusion dans une image représentée par des données d'impression ; et
contrôler un dispositif d'inspection (30) qui inspecte une imprimé obtenu en imprimant l'image, pour exclure la région d'exclusion spécifiée d'une cible d'inspection,
**caractérisé en ce que** le processus comprend en outre :
détecter une désignation utilisant une couleur spéciale à partir des données d'impression ; et
dans un cas où un message indiquant que la couleur spéciale inclut le matériau colorant spécifique est défini dans des informations de configuration de couleur spéciale pour définir une combinaison d'un ou plusieurs matériaux de couleur pour exprimer la couleur spéciale, spécifier, comme la région d'exclusion, une région qui est une cible d'application de la désignation utilisant la couleur spéciale dans l'image.

11. Procédé de traitement d'informations comprenant :
spécifier une région utilisant un matériau colorant spécifique autre qu'un matériau colorant d'une couleur de base, comme une région d'exclusion dans une image représentée par des données d'impression ; et
contrôler un dispositif d'inspection (30) qui inspecte une imprimé obtenu en imprimant l'image, pour exclure la région d'exclusion spécifiée d'une cible d'inspection,
**caractérisé en ce que** le procédé de traitement d'informations comprend en outre :
détecter une désignation utilisant une couleur spéciale à partir des données d'impression ; et
dans un cas où un message indiquant que la couleur spéciale inclut le matériau colorant spécifique est défini dans des informations de configuration de couleur spéciale pour définir une combinaison d'un ou plusieurs matériaux de couleur pour exprimer la couleur spéciale, spécifier, comme la région d'exclusion, une région qui est une cible d'application de la désignation utilisant la couleur spéciale dans l'image.
